# EUROPEAN PATENT SPECIFICATION

(11) **EP 0 416 312 B1**
(45) Date of publication and mention of the grant of the patent: **02.11.1994**
(21) Application number: 90115300.7
(22) Date of filing: 09.08.1990
(51) Int. Cl.: C23C 18/16, B01D 61/44, B01D 61/46, C07C 227/40

(54) **Method of continuously removing and obtaining ethylene diamine tetraacetic acid (EDTA) from the process water of electroless copper plating**
Verfahren zur kontinuierlichen Entfernung und Rückgewinnung von Ethylendiamintetra-Essigsäure (EDTA) aus dem Prozesswasser der stromlosen Kupferplattierung
Procédé pour séparer et récupérer en continu l'acide éthylène diamine tétra-acétique (EDTA) des eaux de traitement pour déposer chimiquement le cuivre

(30) Priority: 01.09.1989 DE 3929137
(43) Date of publication of application: 13.03.1991
(73) Proprietor: International Business Machines Corporation, Armonk, N.Y. 10504 (US); FRAUNHOFER-GESELLSCHAFT ZUR FÖRDERUNG DER ANGEWANDTEN FORSCHUNG E.V., 80636 München (DE)
(72) Inventor: Bauer, Bernd, D-7000 Stuttgart 80 (DE); Erlmann, Wolfgang, D-7033 Herrenberg (DE); Strathmann, Heiner, Prof.-Dr., D-7400 Tübingen (DE)
(74) Representative: Schäfer, Wolfgang, Dipl.-Ing.

(56) References cited:
- EP-A- 0 415 119
- US-A- 4 549 946
- PATENT ABSTRACTS OF JAPAN, vol. 13, no. 315 (C-619)[3663], 18th July 1989; & JP-A-1 102 049

## Description

The invention relates to a method of continuously removing and obtaining ethylene diamine tetraacetic acid (EDTA) from the process water of electroless copper plating, and to devices for carrying out this method.

In the production of printed circuit boards is frequently necessary to resort to a chemical reaction for the deposition of copper. The most important components of these so-called electroless copper plating baths, apart from copper sulphate and sodium hydroxide are a reducing agent, preferably formaldehyde, and ethylene diamine tetraacetic acid (EDTA) as a complexing agent. As the effectiveness of the reducing agent is usually highly increased with high pH-values, the concentrations for EDTA have to be very high to prevent the precipitation of copper hydroxide. In this process, the EDTA is not chemically modified and therefore not used up during the process. For economic and environmental reasons the EDTA has therefore to be removed and recovered from the process water.

During conventional electroless copper deposition, the following reaction takes place in the plating bath:

CuSO₄ + 4NaOH + 2HCHO->Cu + Na₂SO₄ + 2Na(HCOO) + H₂ + 2H₂O

Beside the rapid consumption of copper sulphate, formaldehyde and sodium hydroxide the quality of the copper deposition is negatively affected by the parallel enrichment of the plating bath with sodium sulphate and sodium formate. The resulting reduction of the bath retention times is counteracted by continuous disposal of the product substances with a simultaneous addition of consumption substances. It is e.g. known from DE-PS 3,022,962 to regenerate chemical copper plating solutions in that the counter-ions for the copper ions and the ions formed by the oxidation of the reducing agents and inhibiting the plating process are removed by electrodialysis.

These methods, however, were not accepted in practical use as they either did not achieve a "steady state" over extended test periods, or because the material available does not have retention times sufficient in relation to the aggressive medium of the copper bath. To give an example: the direct electrodialytical separation of the inhibitors produced failed due to the insufficient alkali resistance of the commercially available anion exchange membranes.

From EP-A-0,015,737 a process is known for regenerating a spent electroless copper plating bath which contains alkali metal salts resulting from the reduction of a water soluble copper salt under copper plating and reducing conditions. The regeneration is effected by means of the electrodialytic transfer of a least a portion of the anions in the spent plating bath through an anionic permselective membrane into the anode compartment of an electrodialytic cell. In the preferred embodiment, hydroxyl ions from the cathode compartment of the electrodialytic cell are concurrently transferred through a second anionic permselective membrane to replace the transferred anions, the replacement taking place in a compartment of the electrodialytic cell located between the two anionic permselective membranes.

From DE-AS 2,115,687 a method is known of continuously regenerating by electrodialysis rinsing water used for the electroless deposition of metal. For this purpose, the ions to be retrieved are concentrated with the aid of an electrodialysis cell comprising anion and cation permeable membranes, the electrolyte rinsing flows being circulated and the voltage being adjusted such that membrane polarization occurs. However, the stability of the membranes, in particular that of the anion exchange membranes, is greatly reduced by the fact that the untreated bath solution directly passes the concentrate cycle of the first electrodialysis stage. This method does not permit separating chelating agents, such as EDTA, as this would necessitate adjusting the solution to an initial pH value of about 1.7.

As a consequence, electroless copper plating baths have in practical use to be operated with a continuous overflow which just equals the volume extension owing to a replenishing of the educts. Since after their removal from the bath the plated printed circuit boards are cleaned with fully desalted water this rinsing water can be added to the overflow solution. The result is a solution which apart from sodium sulphate and sodium formate contains traces of formaldehyde and in particular large quantities of copper-EDTA. For reasons of economy, and especially in view of the disposal problems involved all environment-relevant components will have to be separated completely. As copper can be completely removed electrolytically, with the formaldehyde simultaneously oxidizing into sodium formate, the disposal problems involved with the separation of the EDTA are considerable.

According to one method, EDTA-containing solutions are disposed of by decomposing the EDTA. Such decomposition can be effected by chemical or anodic oxidation. However, these processes involve high costs for the chemicals or the energy required. Furthermore, it is technically quite complicated to direct these reactions in such a manner that with respect to their effects on the environment only unharmful and non-toxic decomposition products are formed, with this question becoming particularly relevant in those cases where under the emission rates fixed by legislation EDTA is to be disposed into sewage.

Another disadvantage of these decomposition reactions is the continuous EDTA consumption. As EDTA acts as a complexing agent exclusively and is thus not used up, its recycling is desirable in any case. Such recycling is achieved by separating the charge-neutral EDTA. For that purpose, by means of an electrolysis at pH-values around 13 the complexed copper is separated from the solution, and simultaneously the EDTA is set free from the complex. In a second reaction, the formaldehyde is oxidized to formic acid. Subsequently, by admixing strong mineral acids, e.g. sulphuric acid a pH-value of 1.7 has to be set to precipitate the charge-neutral EDTA. The supernatant liquid containing up to 1,500 ppm EDTA is separated, neutralized with sodium hydroxide and directed to an evaporation system. The thus obtained neutral salt mainly contains sodium sulphate from the precipitation and neutralization process, and only about 2 % Na₂EDTA. This low complexing agent percentage, however, requires declaration and storage as special waste.

It is therefore the object of the present invention to provide a method by means of which EDTA is removed and extracted from the process water of electroless copper plating substantially continuously, and if possible without further auxiliary substances, and by which re-use is made possible. It is furthermore the object of the present invention to provide devices for implementing the method as disclosed by the invention.

This object is achieved by methods by means of EDTA protonation as defined in the claims 1 or 7.

The advantage of the method as disclosed by claim 1 consists in that the protons required for converting the EDTA into the uncharged state are not added via mineral acids - and therefore with additional anions - but via an electrodialytical water dissociation by means of bipolar membranes, with the necessary pH-value for protonation being set through a pH-controlled electric field regulation via the bipolar membranes, thus avoiding a pH drifting, so that the method as disclosed by the present invention may be continuously implemented with optimum pH-values.

In order to separate the still present EDTA (in the order of 1,000 ppm) in the remaining fluid from the other present ions the fluid is advantageously directed through a second electrodialysis cell (EDZ2) alternatingly equipped with ion and cation exchange membranes. With an optimum pH-value of 1.7 there is in the electrodialysis a transport of sulphate and formate ions into the so-called concentrate cycle, while the EDTA remains in the diluate cycle and is concentrated there, which causes further EDTA precipitation. The use of the electrodialysis cell EDZ2 is possible without the previous use of electrodiaylsis cell EDZ1, by effecting protonation through acidification with a mineral acid, preferably with sulphuric acid which, as pointed out above, brings less favorable results but is less complex from an apparatus point of view. In protonation, the pH-value is preferably lowered to a value between 0.9 and 2.2, 1.7 being the best value.

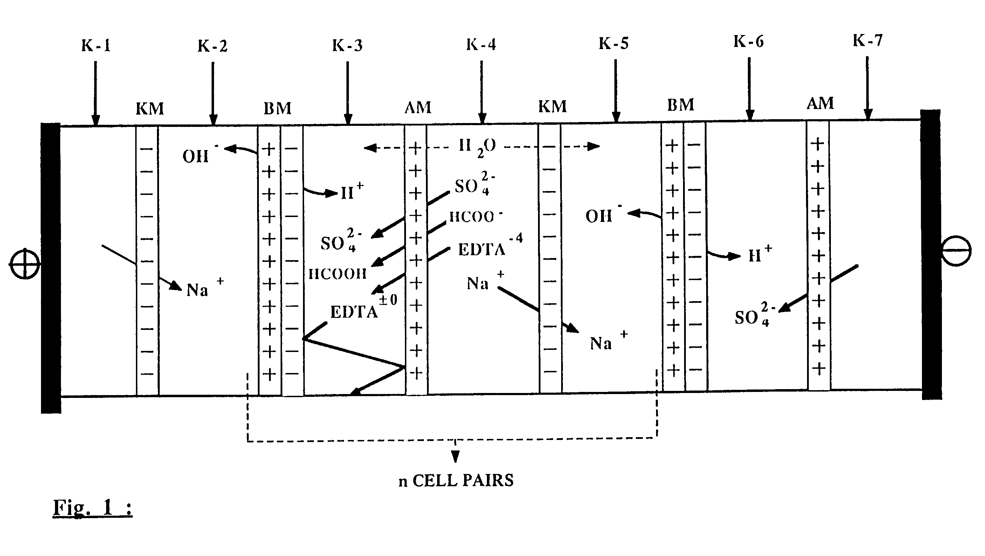

Figures 1 to 3 show those components of the specially developed electrodialysis cells EDZ1 which are essential for carrying out the method as disclosed by the present invention, as well as the reactions in the individual chambers.

The electrodialysis cell according to Fig. 1 comprises the following arrangement of anode (A), cathode (K), bipolar membranes (BM), anion exchange membrane (AM), cation exchange membranes (KM) and chambers (Kᵢ), with the anion-selective layer of the bipolar membranes facing the anode, and n representing values from 1 to 100.

A-K₁-KM-K₂-(BM-K₃-AM-K₄-KM-K₅-)ₙ BM-K₆-AM-K₇-K

Chamber K₁ forms the anode section and is limited on the cathode side by a cation exchange membrane, chamber K₂ is limited on the anode side by a cation exchange membrane and on the cathode side by a bipolar membrane, chamber K₆ on the anode side by a bipolar membrane and on the cathode side by an anion exchange membrane. Chamber K₇ forms the cathode section and is limited on the anode side by an anion exchange membrane. Chambers K₃, K₄ and K₅ form one unit which exists n-times arranged in series, n being able to adopt the values 1 to 100, preferably the values 2 to 10. On the anode side chamber K₃ is limited by a bipolar membrane and on the cathode side by an anion exchange membrane, chamber K₄ is limited on the anode side by an anion exchange membrane and on the cathode side by a cation exchange membrane, chamber K₅ on the anode side by a cation exchange membrane and on the cathode side by a bipolar membrane.

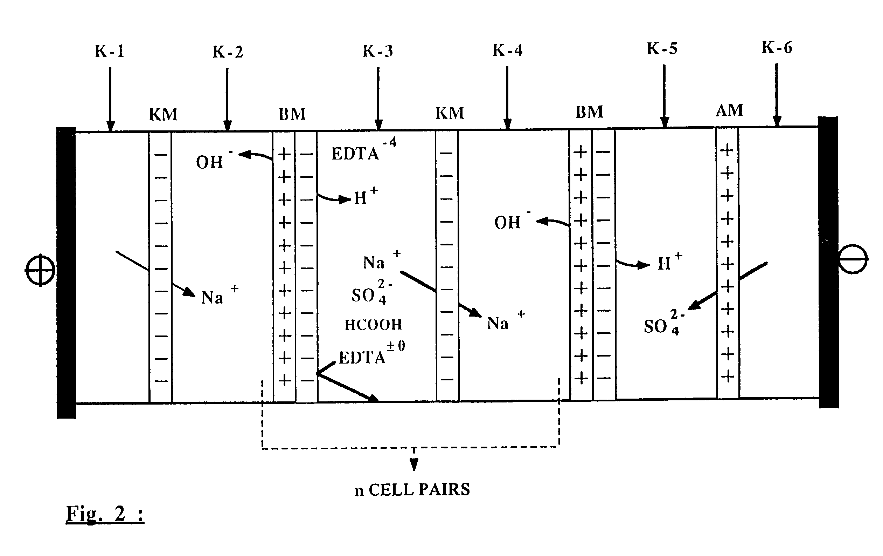

The electrodialysis cell according to Fig. 2 comprises the following arrangement of anode (A), cathode (K), bipolar membranes (BM), anion exchange membrane (AM), cation exchange membranes (KM) and chambers (Kᵢ), with the anion-selective layer of the bipolar membranes facing the anode, and n representing values from 1 to 100.

A-K₁-KM-K₂-(BM-K₃-KM-K₄-)ₙ BM-K₅-AM-K₆-K

Chamber K₁ forms the anode section and is limited on the cathode side by a cation exchange membrane, chamber K₂ is limited on the anode side by a cation exchange membrane and on the cathode side by a bipolar membrane, chamber K₅ on the anode side by a bipolar membrane and on the cathode side by an anion exchange membrane. Chamber K₆ forms the cathode section and is limited on the anode side by an anion exchange membrane. Chambers K₃ and K₄ form one unit which exists n-times arranged in series, n being able to adopt the values 1 to 100, preferably the values 2 to 10. On the anode side chamber K₃ is limited by a bipolar membrane and on the cathode side by an cation exchange membrane, chamber K₄ is limited on the anode side by a cation exchange membrane and on the cathode side by a bipolar membrane.

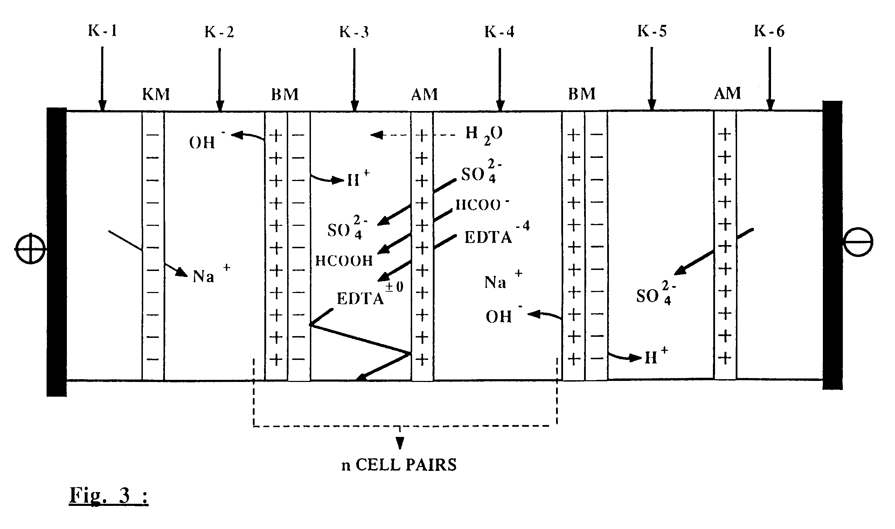

The electrodialysis cell according to Fig. 3 comprises the following arrangement of anode (A), cathode (K), bipolar membranes (BM), anion exchange membrane (AM), cation exchange membranes (KM) and chambers (Kᵢ), with the anion-selective layer of the bipolar membranes facing the anode, and n representing values from 1 to 100.

A-K₁-KM-K₂-(BM-K₃-AM-K₄-)ₙ BM-K₅-AM-K₆-K

Chamber K₁ forms the anode section and is limited on the cathode side by a cation exchange membrane, chamber K₂ is limited on the anode side by a cation exchange membrane and on the cathode side by a bipolar membrane, chamber K₅ on the anode side by a bipolar membrane and on the cathode side by an anion exchange membrane. Chamber K₆ forms the cathode section and is limited on the anode side by an anion exchange membrane. Chambers K₃ and K₄ form one unit which exists n-times arranged in series, n being able to adopt the values 1 to 100, preferably the values 2 to 10. On the anode side chamber K₃ is limited by a bipolar membrane and on the cathode side by an anion exchange membrane, chamber K₄ is limited on the anode side by an anion exchange membrane and on the cathode side by a bipolar membrane.

The method as disclosed by the invention will be described below in detail by means of three embodiments with reference to Figures 1 to 3.

A first embodiment of the method as disclosed by the invention is as follows: after the copper ions have been removed from the process water, optionally by means of electrolysis, with a pH-value of 12.5 to 13, and unused formaldehyde has been oxidized into formic acid, the bath fluid shows a pH-value of 12.5 to 13 and comprises apart from water sulphate, formate, sodium and EDTA ions. Reference is also made to the reaction equation of p. 2. After this fluid has been directed into the chambers K₄ of the electrodialysis cell EDZ1 the sulphate, formate and EDTA ions migrate, after the application of an electric DC field, through the anion exchange membranes into chambers K₃, the sodium ions through the cation exchange membranes into chamber K₅. Owing to the electric DC field applied an electrodialytical water dissociation is effected via the bipolar membranes, and from the bipolar membranes protons are directed into chambers K₃ and K₆, and hydroxyl ions into chambers K₅ and chamber K₂. In chambers K₃, with corresponding pH-values, the formate ions are protonated to formic acid, and the EDTA is converted into its charge-neutral form. With pH-values from 3.3 onward a beginning crystallization of the charge-neutral EDTA becomes visible, with the EDTA contents of the supernatant solution reaching its minimum with a pH-value of 1.7 only. In chambers K₅, sodium hydroxide is formed of the sodium ions of chambers K₄ and of the hydroxyl ions from the bipolar membranes. Chamber K₁ contains as anolyte sodium sulphate or sodium hydroxide, chamber K₇ contains as catholyte sodium sulphate or sulphuric acid. Through the cation exchange membrane sodium ions migrate from chamber K₁ into chamber K₂ and form sodium hydroxide with the hydroxyl ions from the bipolar membrane. Through the anion exchange membrane sulphate ions migrate from chamber K₇ into chamber K₆ and form sulphuric acid with the protons from the bipolar membrane. From chamber K₄ purified process water is removed and from chamber K₃ a suspension from which by means of filtration pure EDTA can be isolated. From chambers K₂ and K₅ pure sodium hydroxide can be obtained and from chamber K₆ pure sulphuric acid, both being readded in the cycle of chambers K₁ and K₇. A continuous processing has thus become possible.

A second embodiment of the method as disclosed by the invention is as follows: after copper ions have been removed from the spent bath, optionally by means of electrolysis, with a pH-value of 12.5 to 13, and unused formaldehyde has been oxidized into formic acid, the bath fluid shows a pH-value of 12.5 to 13 and apart from water comprises sulphate, formate, sodium and EDTA ions. Reference is also made to the reaction equation of page 2. After this fluid has been directed into the chambers K₃ of the electrodialysis cell EDZ1 the sulphate, formate and EDTA ions migrate, after the application of an electric DC field, through the cation exchange membranes into chambers K₄. Owing to the electric DC field applied an electrodialytical water dissociation is effected via the bipolar membranes, and from the bipolar membranes protons are directed into chambers K₃ and into chamber K₅, and hydroxyl ions into chambers K₄ and into chamber K₂. In chambers K₃, with corresponding pH-values, the formate ions are protonated into formic acid, and the EDTA is converted into its charge-neutral form. With pH-values from 3.3 onward, a beginning crystallization of the charge-neutralized EDTA becomes visible, with the EDTA contents of the supernatant solution reaching its minimum with a pH-value of 1.7 only. In chambers K₄, sodium hydroxide is formed of the sodium ions of chambers K₃ and of the hydroxyl ions from the bipolar membranes. Chamber K₁ contains as an anolyte sodium sulphate or sodium hydroxide, chamber K₆ contains as catholyte sodium sulphate or sulphuric acid. Through the cation exchange membrane sodium ions migrate from chamber K₁ into chamber K₂ and form sodium hydroxide with the hydroxyl ions from the bipolar membrane. Through the anion exchange membrane sulphate ions migrate from chamber K₆ into chamber K₅ and form sulphuric acid with the protons from the bipolar membrane. From chamber K₃ a suspension is removed from which by means of filtration pure EDTA can be isolated. From chambers K₂ and K₄ pure sodium hydroxide can be obtained and from chamber K₅ pure sulphuric acid, both being readded in the cycle of chambers K₁ and K₆. A continuous recycling has thus become possible.

A third embodiment of the method as disclosed by the invention is as follows: after copper ions have been removed from the spent bath, optionally by means of electrolysis, with a pH-value of 12.5 to 13, and unused formaldehyde has been oxidized to formic acid, the bath fluid shows a pH-value of 12.5 to 13 and apart from water comprises sulphate, formate, sodium and EDTA ions. Reference is also made to the reaction equation of page 2. After this fluid has been directed into the chambers K₄ of the electrodialysis cell EDZ1 the sulphate, formate and EDTA ions migrate, after the application of an electric DC field, through the anion exchange membranes into chambers K₃. Owing to the electric DC field applied an electrodialytical water dissociation is effected via the bipolar membranes, and from the bipolar membranes protons are directed into chambers K₃ and into chamber K₅, and hydroxyl ions into chambers K₄ and into chamber K₂. In chambers K₃, with corresponding pH-values, the formate ions are protonated to formic acid, and the EDTA is converted into its charge-neutral form. With pH-values from 3.3 onward, a beginning crystallization of the charge-neutral EDTA becomes visible, with the EDTA contents of the supernatant solution reaching its minimum with a pH-value of 1.7 only. In chambers K₄, sodium hydroxide is formed of the sodium ions of chambers K₃ and of the hydroxyl ions from the bipolar membranes. Chamber K₁ contains as an anolyte sodium sulphate or sodium hydroxide, chamber K₆ contains as catholyte sodium sulphate or sulphuric acid. Through the cation exchange membrane sodium ions migrate from chamber K₁ into chamber K₂ and form sodium hydroxide with the hydroxyl ions from the bipolar membrane. Through the anion exchange membrane sulphate ions migrate from chamber K₆ into chamber K₅ and form sulphuric acid with the protons from the bipolar membrane. From chamber K₃ a suspension is removed from which by means of filtration pure EDTA can be isolated. From chambers K₂ pure sodium hydroxide can be obtained and from chamber K₅ pure sulphuric acid, both being readded in the cycle of chambers K₁ and K₆. A continuous recycling has thus become possible.

In order to arrive at a self-regulating system, and to perform a continuous disposal and recovery of the EDTA, an important feature of the method as disclosed by the invention is the pH-adjustment in chambers K₃ of the electrodialysis cells EDZ1 in accordance with Figures 1 to 3 by means of a pH-controlled electric field regulation via the bipolar membranes. For that purpose, the electrode of a pH measuring device is provided in chambers K₃ of the electrodialysis cells EDZ1 of Figures 1 to 3, and this measuring device is connected to a computer which controls a voltage regulator. Thus the potential difference applied to the electrodialysis cells EDZ1 is controlled as a function of the pH-value in chambers K₃, and thus the pH-value in chambers K₃ is controlled via the bipolar membranes. The respective pH-value for converting the EDTA into its charge-neutralized form can thus be set accordingly.

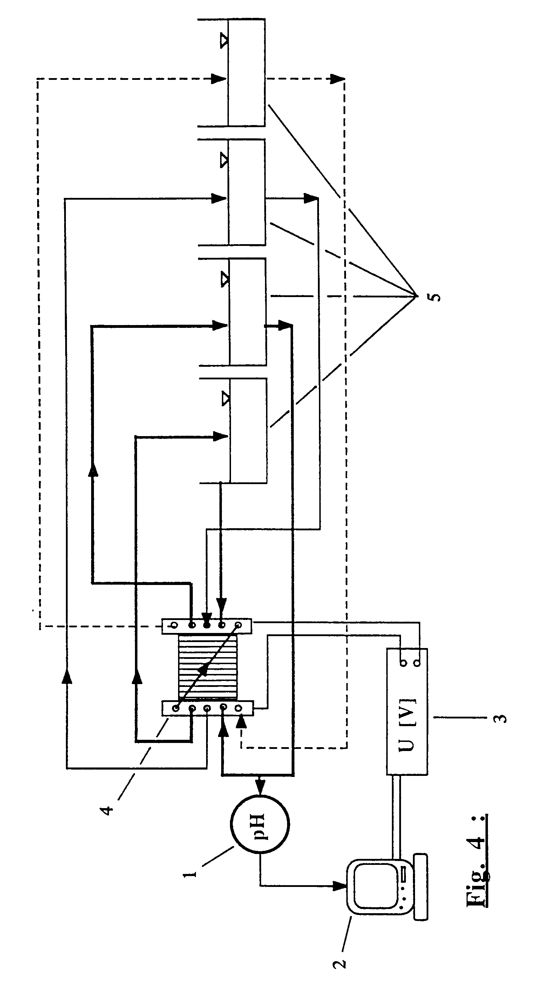

Figure 4 depicts an arrangement of this electric field regulation, with (1) representing the pH measuring device, (2) the computer, (3) the voltage regulator, (4) the electrodialysis cell, and (5) the rinsing containers for the chambers of the electrodialysis cells. Without restricting the invention, the electrodialysis cells EDZ1 are operated, for carrying out the method as disclosed by the invention with current densities from 1 to 150 mA/cm², preferably with 2 to 20 mA/cm².

For the electrodialysis cells EDZ1 for carrying out the method as disclosed by the invention commercially available cation and anion exchange membranes can be used. Examples for cation exchange membranes are NEOSEPTA ^{R} CL-25 T, NEOSEPTA ^{R} CMS (Tokuyama Soda Co., Japan) and SELEMION ^{R} CMV (Asahi Glass Co., Japan). Examples for anion exchange membranes are NEOSEPTA ^{R} ACH-45 T, NEOSEPTA ^{R} AMS, SELEMION ^{R} AMV, SELEMION ^{R} AMP and SELEMION ^{R} AMF. In the electrodialysis cells for carrying out the method as disclosed by the invention, the anode section is limited by a cation exchange membrane and the cathode section by an anion exchange membrane. Without restricting the invention, exchange membranes of the type NEOSEPTA ^{R} CMX and AMX of Tokuyama Soda Co., Japan, are preferably used here. Without restricting the invention, anion exchange membranes of the type NEOSEPTA ^{R} ACM, NEOSEPTA ^{R} AFN or NEOSEPTA ^{R} AM-3 are preferably used for the cell stack, and cation exchange membranes of the type NEOSEPTA ^{R} CMS or NEOSEPTA ^{R} CM-2.

The NEOSEPTA^{R} membranes of Tokuyama Soda Co., Japan, are microheterogeneous ion exchange membranes of the interpolymer membrane type. The skeleton is produced by what is known as the "paste method", using 100 parts PVC powder, 90 parts F-monomer, 10 parts divinyl benzene, 30 parts dioctylphtalate, and 1 part benzoyl peroxide by coating a PVC net. The F-monomers used are styrene for the cation exchange membranes and chloromethylstyrene, 4-vinylpyridine or 2-methyl-5-vinylpyridine for the anion exchange membranes. The membranes of Asahi Glass are quasi-homogeneous ion exchange membranes. These are produced of a styrene prepolymer and a styrene/butadiene copolymer, following the addition of divinyl benzene, on a PVC net. Functionalization is effected either by sulphonation (CMV) or by chloromethylation followed by quaternization (AMV). The table contains the technical data for the above-mentioned exchange membranes. The cation exchange membranes are strongly acid (-SO₃H), existing in Na form, the anion exchange membranes are strongly basic (-N⁺Rₑ), existing in Cl form. The resistance in ohm was determined by a 0.5 n NaCl solution at 25° C.

| NEOSEPTA^{R} | Type | Electr. Resistance [Ω cm²] | Bursting Strength [kg cm^{-cm}] | Thickness [mm] |
|---|---|---|---|---|
| Cl-25T | cation permeable | 2.2-3.0 | 3.0-4.0 | 0.15-0.17 |
| CMS | cation permeable | 1.5-2.5 | 3-4 | 0.14-0.17 |
| CMX | cation permeable | 2.5-3.5 | 5-6 | 0.17-0.19 |
| CM-2 | cation permeable | 2.0-3.0 | 3.0-3.5 | 0.13-0.16 |
| AMX | anion permeable | 2.5-3.5 | 4.5-5.5 | 0.16-0.18 |
| ACM | anion permeable | 4.0-5.0 | 2-3 | 0.11-0.13 |
| AFN | anion permeable | 0.4-1.5 | 2-3.5 | 0.15-0.20 |
| AM-3 | anion permeable | 3.0-4.0 | 3.0-3.5 | 0.13-0.16 |
| ACH-45T | anion permeable | 2.0-2.7 | 3.5-4.5 | 0.14-0.20 |
| ACS | anion permeable | 2.0-2.5 | 3-5 | 0.15-0.20 |
| CMX and AMX are mechanically reinforced, AFN is fouling resistant and ACH-45 T may be used at high pH values. | | | | |

| SELEMION^{R} | Type | Electr. Resistance [Ω cm²] | Bursting Strength [kg cm^{-cm}] | Thickness [mm] |
|---|---|---|---|---|
| CMV | cation permeable | 2.0-3.5 | 3-5 | 0.13-0.15 |
| AMV | anion permeable | 1.5-3.0 | 2-5 | 0.11-0.15 |
| SELEMION^{R} AMP is a particularly alkaline-stable membrane and SELEMION^{R} AMF is fouling resistant. | | | | |

As bipolar membranes laminates of two ion-selective films of opposite polarity can be used which can be obtained by placing together two commercially available cation and anion exchange membranes, or functionalized composite films with cation and anion-selective characteristics on both sides of the membrane. For their production, reference is made to the article "Development of Bipolar Membranes" by B. Bauer, F.J. Gerner and H. Strathmann in Desalination, 68, 279-292, 1988.

In order to release the EDTA from the complex it may be advisable in some cases electrolytically to remove the copper ions from the process waters prior to their processing in accordance with the method as disclosed by the invention, i.e. prior to their introduction into the electrodialysis cells EDZ1.

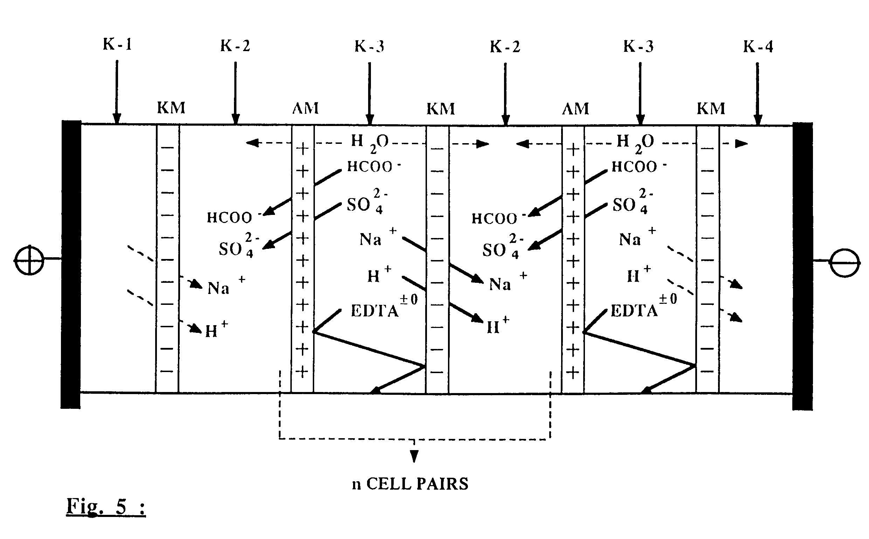

Depending on each respective case it may be advisable, after the separation of the charge-neutral EDTA in the EDZ1, or after the addition of the mineral acid (preferably sulphuric acid) respectively, to direct the remaining fluid which still contains EDTA in the order of 1,000 ppm through a second electrodialysis cell EDZ2 which is alternatingly equipped with anion and cation exchange membranes. Figure 5 shows such an electrodialysis cell EDZ2. It includes the following arrangement of anode (A), cathode (K), anion exchange membranes (AM), cation exchange membranes (KM), and chambers Kᵢ, with n being able to adopt values between 1 and 100. Cells with values for n between 2 and 10 are preferred.

A-K₁-KM-K₂-(AM-K₃-KM-K₂-)ₙ AM-K₃-KM-K₄-K

Without restricting the invention, the electrodialysis cells are preferably operated with current densities between 5 and 30 mA/cm².

In the electrodialysis of the remaining solution there is, with a pH-value of about 1.7, a transport of the sulphate and formate ions into the so-called concentrate cycle (chambers K₂) and a simultaneous retention of the EDTA in the diluate cycle (chambers K₃). This leads towards a slow enrichment of the EDTA in the fluid, which is further intensified by an electro-osmotic water transport from the diluate to the concentrate cycle, and which initiates a further EDTA precipitation. The EDTA-free fluid in the concentrate cycle can be directed into sewage, optionally by inserting further conventional cleaning stages, whereas the EDTA containing fluid from the diluate cycle is advantageously combined again with the fluid remaining after EDTA precipitation (see above).

It has thus been made possible by the methods as disclosed by the invention, optionally in combination with further process steps like the electrolytic pre-cleaning and/or the electrodialytic supplementary cleaning, continuously to remove and to obtain EDTA from copper plating baths, and to purify the process water in such a manner that it can either be directed into sewage direct, or recycled into the process.

## Claims

1. Method of continuously removing and obtaining ethylene diamine tetraacetic acid (EDTA) from the process water of electroless copper plating by means of EDTA protonation, characterized in that the process water containing the EDTA is directed into an electrodialysis cell EDZ1 which is alternatingly equipped with bipolar membranes and anion exchange membranes and/or cation exchange membranes, and to which a potential difference is applied, that the EDTA is converted into its charge-neutral form, that the protons required for that process are generated via bipolar membranes by means of electrodialysis, and that the required pH-value is adjusted through a pH-controlled electric field regulation via the bipolar membranes.

2. Method as claimed in claim 1, characterized in that the EDTA existing as an anion is separated from the process water prior to protonation via an anion exchange membrane through electrodialysis, and transported into a chamber limited by a bipolar membrane and by the anion exchange membrane.

3. Method as claimed in any one or several of claims 1 to 2, characterized in that cations are removed from the process water through electrodialysis via a cation exchange membrane.

4. Method as claimed in any one. or several of claims 1 to 3, characterized in that the electrodialysis cell EDZ1 is operated with a current density of 1 to 150 mA/cm².

5. Method as claimed in claim 4, characterized in that the electrodialysis cell EDZ1 is preferably operated with a current density of 2 to 20 mA/cm².

6. Method as claimed in any one or several of claims 1 to 5, characterized in that the fluid containing the charge-neutral EDTA is directed through a second electrodialysis cell EDZ2 which is alternatingly equipped with anion and cation exchange membranes, and that the remaining ions are removed by electrodialysis.

7. Method of continuously removing and obtaining ethylene diamine tetraacetic acid (EDTA) from the process water of electroless copper plating by means of EDTA protonation, characterized in that the process water containing the EDTA is acidified with mineral acid in a manner known per se, and the precipitated EDTA is filtered off, and the remaining fluid is subsequently directed through an electrodialysis cell EDZ2 alternatingly equipped with anion and cation exchange membranes, and that the EDTA is separated from the remaining ions in the fluid by means of electrodialysis.

8. Method as claimed in any one or several of claims 1 to 7, characterized in that prior to protonation the copper ions are electrolytically removed from the process water.

9. Method as claimed in any one or several of claims 1 to 8, characterized in that during protonation the pH-value of the solution is lowered to a value between 0.9 and 2.2, preferably to a value of approximately 1.7.

10. Method as claimed in claim 6 or 7, characterized in that the electrodialysis cell EDZ2 is operated with a current density of 5 to 30 mA/cm².

11. Electrodialysis cell EDZ1 for implementing the method as claimed in any one or several of claims 1 to 6, 8 to 9, characterized in that it comprises the following arrangement of anode (A), cathode (K), bipolar membranes (BM), anion exchange membranes (AM), cation exchange membranes (KM) and chambers (Kᵢ), the anion-selective layer of the bipolar membranes facing the anode, and n representing values from 1 to 100:
A-K₁-KM-K₂-(BM-K₃-AM-K₄-KM-K₅-)ₙ BM-K₆-AM-K₇-K

12. Electrodialysis cell EDZ1 for implementing the method as claimed in any one or several of claims 1, 3 to 6, 8 to 9, characterized in that it comprises the following arrangement of anode (A), cathode (K), bipolar membranes (BM), anion exchange membranes (AM), cation exchange membranes (KM) and chambers (Kᵢ), the anion-selective layer of the bipolar membranes facing the anode, and n representing values from 1 to 100:
A-K₁-KM-K₂-(BM-K₃-KM-K₄-)ₙ BM-K₅-AM-K₆-K

13. Electrodialysis cell EDZ1 for implementing the method as claimed in any one or several of claims 1, 2, 4 to 6, 8 to 9, characterized in that it comprises the following arrangement of anode (A), cathode (K), bipolar membranes (BM), anion exchange membranes (AM), cation exchange membrane (KM) and chambers (Kᵢ), the anion-selective layer of the bipolar membranes facing the anode, and n representing values from 1 to 100:
A-K₁-KM-K₂-(BM-K₃-AM-K₄-)ₙ BM-K₅-AM-K₆-K

14. Electrodialysis cell EDZ1 as claimed in claim 11, 12, or 13, characterized in that n preferably adopts values between 2 and 10.

## Patentansprüche

1. Verfahren zur kontinuierlichen Entfernung und Rückgewinnung von Ethylendiamin-Tetraessigsäure (EDTA) aus dem Prozeßwasser der stromlosen Kupferplattierung mittels Protonierung von EDTA, dadurch gekennzeichnet, daß das die EDTA enthaltende Prozeßwasser in eine Elektrodialysezelle EDZ1 geleitet wird, die abwechselnd mit bipolaren Membranen und Anionenaustauschermembranen und/oder Kationenaustauschermembranen ausgestattet ist und an die eine Potentialdifferenz angelegt wird, daß die EDTA in ihre ungeladene Form umgewandelt wird, daß die für dieses Verfahren erforderlichen Protonen mittels Elektrodialyse über bipolare Membranen erzeugt werden und daß der erforderliche pH-Wert durch pH-gesteuerte Regelung des elektrischen Felds über die bipolaren Membranen eingestellt wird.

2. Verfahren gemäß Anspruch 1, dadurch gekennzeichnet, daß die als Anion vorliegende EDTA vor der Protonierung mittels Elektrodialyse über eine Anionenaustauschermembran vom Prozeßwasserabgetrennt wird und in eine Kammer befördert wird, die durch eine bipolare Membran und die Anionenaustauschermembran abgegrenzt ist.

3. Verfahren gemäß einem oder mehreren der Ansprüche 1 bis 2, dadurch gekennzeichnet, daß Kationen mittels Elektrodialyse über eine Kationenaustauschermembran aus dem Prozeßwasser entfernt werden.

4. Verfahren gemäß einem oder mehreren der Ansprüche 1 bis 3, dadurch gekennzeichnet, daß die Elektrodialysezelle EDZ1 mit einer Stromdichte zwischen 1 und 150 mA/cm² betrieben wird.

5. Verfahren gemäß Anspruch 4, dadurch gekennzeichnet, daß die Elektrodialysezelle EDZ1 vorzugsweise mit einer Stromdichte zwischen 2 und 20 mA/cm² betrieben wird.

6. Verfahren gemäß einem oder mehreren der Ansprüche 1 bis 5, dadurch gekennzeichnet, daß die die ungeladene EDTA enthaltende Flüssigkeit durch eine zweite Elektrodialysezelle EDZ2 geleitet wird, die abwechselnd mit Anionen- und Kationenaustauschermembranen ausgestattet ist, und daß die restlichen Ionen durch Elektrodialyse entfernt werden.

7. Verfahren zur kontinuierlichen Entfernung und Rückgewinnung von Ethylendiamin-Tetraessigsäure (EDTA) aus dem Prozeßwasser der stromlosen Kupferplattierung mittels Protonierung von EDTA, dadurch gekennzeichnet, daß die EDTA auf bekannte Weise mit Mineralsäure angesäuert wird, die ausgefallenen EDTA abfiltriert wird, die verbleibende Flüssigkeit anschließend durch eine Elektrodialysezelle EDZ2 geleitet wird, die abwechselnd mit Anionen- und Kationenaustauschermembranen ausgestattet ist, und dadurch, daß die EDTA mittels Elektrodialyse von den übrigen Ionen in der Flüssigkeit abgetrennt wird.

8. Verfahren gemäß einem oder mehreren der Ansprüche 1 bis 7, dadurch gekennzeichnet, daß die Kupferionen vor der Protonierung elektrodialytisch aus dem Prozeßwasser entfernt werden.

9. Verfahren gemäß einem oder mehreren der Ansprüche 1 bis 8, dadurch gekennzeichnet, daß der pH-Wert der Lösung während der Protonierung auf einen Wert zwischen 0,9 und 2,2, vorzugsweise auf einen Wert von ungefähr 1,7, erniedrigt wird.

10. Verfahren gemäß Anspruch 6 oder 7, dadurch gekennzeichnet, daß die Elektrodialysezelle EDZ2 mit einer Stromdichte zwischen 5 und 30 mA/cm² betrieben wird.

11. Elektrodialysezelle EDZ1 zur Implementierung des Verfahrens gemäß einem oder mehreren der Ansprüche 1 bis 6, 8 bis 9, dadurch gekennzeichnet, daß sie folgende Anordnung von Anode (A), Kathode (K), bipolaren Membranen (BM), Anionenaustauschermembranen (AM), Kationenaustauschermembranen (KM) und Kammern (Kᵢ) umfaßt, wobei die anionenselektive Schicht der bipolaren Membranen zur Anode zeigt und n einen Wert zwischen 1 und 100 darstellt:
A-K₁-KM-K₂-(BM-K₃-AM-K₄-KM-K₅-)ₙ BM-K₆-AM-K₇-K .

12. Elektrodialysezelle EDZ1 zur Implementierung des Verfahrens gemäß einem oder mehreren der Ansprüche 1, 3 bis 6, 8 bis 9, dadurch gekennzeichnet, daß sie folgende Anordnung von Anode (A), Kathode (K), bipolaren Membranen (BM), Anionenaustauschermembranen (AM), Kationenaustauschermembranen (KM) und Kammern (Kᵢ) umfaßt, wobei die anionenselektive Schicht der bipolaren Membranen zur Anode zeigt und n einen Wert zwischen 1 und 100 darstellt:
A-K₁-KM-K₂-(BM-K₃-KM-K₄-)ₙ BM-K₅-AM-K₆-K .

13. Elektrodialysezelle EDZ1 zur Implementierung des Verfahrens gemäß einem oder mehreren der Ansprüche 1, 2, 4 bis 6, 8 bis 9, dadurch gekennzeichnet, daß sie folgende Anordnung von Anode (A), Kathode (K), bipolaren Membranen (BM), Anionenaustauschermembranen (AM), Kationenaustauschermembranen (KM) und Kammern (Kᵢ) umfaßt, wobei die anionenselektive Schicht der bipolaren Membranen zur Anode zeigt und n einen Wert zwischen 1 und 100 darstellt:
A-K₁-KM-K₂-(BM-K₃-AM-K₄-)ₙ BM-K₅-AM-K₆-K .

14. Elektrodialysezelle EDZ1 gemäß Anspruch 11, 12 oder 13, dadurch gekennzeichnet, daß n vorzugsweise Werte zwischen 2 und 10 annimmt.

## Revendications

1. Procédé pour séparer et récupérer en continu l'acide éthylène diamine tétra-acétique (EDTA) des eaux de traitement pour déposer chimiquement le cuivre par fixation de protons pour la conversion de EDTA, caractérisé en que las eaux de traitement contenant l'acide EDTA sont dirigées dans une cellule d'électrodialyse EDZ1 qui est alternativement équipée de membranes bipolaires et de membranes d'échange d'ions et/ou de membranes d'échange de cations et sur laquelle est appliquée une différence de potentiel, en ce que EDTA est converti dans sa forme de charge neutralisée, en ce que les protons requis pour ce traitement sont engendrés par l'intermédiaire de membranes bipolaires, par électrodialyse, et en ce que la valeur de pH requise est réglée par le contrôle d'un champ électrique de mesure du pH par l'intermédiaire des membranes bipolaires.

2. Procédé selon la revendication 1, caractérisé en ce que EDTA existant en tant qu'anion est séparé des eaux de traitement avant la fixation de protons par l'intermédiaire d'une membrane d'échange d'anions par électrodialyse, et transporté dans une chambre limitée par une membrane bipolaire et par la membrane d'échange d'anions.

3. Procédé selon l'une quelconque ou plusieurs des revendications 1 à 2, caractérisé en ce que des cations sont séparés des eaux de traitement par électrodialyse par l'intermédiaire d'une membrane d'échange de cations.

4. Procédé selon l'une quelconque ou plusieurs des revendications 1 à 3, caractérisé en ce que la cellule d'électrodialyse EDS1 opère avec une densité de courant allant de 1 à 150 mA/cm².

5. Procédé selon la revendication 4, caractérisé en ce que la cellule d'électrodialyse EDZ1 opère de préférence avec une densité de courant allant de 2 à 20 mA/cm² .

6. Procédé selon l'une quelconque ou plusieurs des revendications 1 à 5, caractérisé en ce que le fluide contenant EDTA de charge neutralisée est dirigé dans une deuxième cellule d'électrodialyse EDZ2 qui est alternativement équipée de membranes d'échange d'anions et de cations, et en ce que les ions restants sont séparés par électrodialyse.

7. Procédé pour séparer et récupérer en continu l'acide éthylène diamine trétra-acétique (EDTA) des eaux de traitement pour déposer chimiquement le cuivre au moyen d'une fixation de protons pour la conversion de EDTA, caractérisé en ce que les eaux de traitement contenant l'acide EDTA est acidifiée avec de l'acide minéral d'une manière connue en soi, et que EDTA précipité est obtenu par filtration, et que le fluide restant est ensuite dirigé dans une cellule d'électrodialyse EDZ2 alternativement équipée de membranes d'échange d'anions et de cations, et en ce que EDTA est séparé des ions restant dans le fluide par électrodialyse.

8. Procédé selon l'une quelconque ou plusieurs des revendications 1 à 7, caractérisé en ce que, avant la fixation de protons, les ions cuivre sont électrolytiquement séparés des eaux de traitement.

9. Procédé selon l'une quelconque ou plusieurs des revendications 1 à 8, caractérisé en ce que, durant la fixation de protons, la valeur du pH de la solution est abaissée à une valeur d'environ 1,7.

10. Procédé selon les revendications 6 ou 7, caractérisé en ce que la cellule d'électrodialyse EDZ2 opère avec une densité de courant allant de 5 à 30 mA/cm² .

11. Cellule d'électrodialyse EDZ1 pour la mise en oeuvre du procédé tel qu'il est revendiqué dans l'une quelconque ou plusieurs des revendications 1 à 6, 8 à 9, caractérisé en ce qu'il comprend l'agencement suivant d'anode (A), de cathode (K), de membranes bipolaires (BM), de membranes d'échange d'anions (AM), de membranes d'échange de cations (KM) et de chambres (Kᵢ), la couche sélective d'anions des membranes bipolaires faisant face à l'anode, et n représentant des valeurs allant de 1 à 100:
A-K₁-KM-K₂ - (BM-K₃-AM-K₄-KM-K₅-)ₙ BM-K₆-AM-K₇-K

12. Cellule d'électrodialyse EDZ1 pour la mise en oeuvre du procédé tel qu'il est revendiqué dans l'une quelconque ou plusieurs des revendications 1, 3 à 6, 8 à 9, caractérisé en ce qu'il comprend l'agencement suivant d'anode (A), de cathode (K), de membranes bipolaires (BM), de membranes d'échange d'anions (AM), de membranes d'échange de cations (KM), et de chambres (Kᵢ), la couche sélective d'anions des membranes bipolaires faisant face à l'anode et n représentant des valeurs allant de 1 à 100:
A-K₁-KM-K₂- (BM-K₃-KM-K₄)ₙ BM-K₅-AM-K₆-K

13. Cellule d'électrodialyse EDZ1 pour la mise en oeuvre du procédé tel qu'il est revendiqué dans l'une quelconque ou plusieurs des revendications 1, 2, 4 à 6, 8 à 9, caractérisé en ce qu'il comprend l'agencement suivant d'anode (A), de cathode (K), de membranes bipolaires (BM), de membranes d'échange d'ions (AM), de membranes d'échange de cations (KM), et de chambres (Kᵢ), la couche sélective d'anions des membranes bipolaires représentant des valeurs allant de 1 à 100:
A-K₁-KM-K₂- (BM-K₃-AM-K₄)ₙ BM-K₅-AM-K₆-K

14. Cellule d'électrodialyse EDZ1 selon les revendications 11, 12 ou 13, caractérisée en ce que n adopte de préférence des valeurs situées entre 2 et 10.
